# NOUVEAU FASCICULE DE BREVET EUROPEEN

(11) **EP 1 517 866 B2**
(45) Date de publication et mention de la décision concernant l'opposition: **02.01.2019**
(45) Mention de la délivrance du brevet: 15.12.2010
(21) Numéro de dépôt: 03759983.4
(22) Date de dépôt: 13.06.2003
(51) Int. Cl.: C03C 17/36, C23C 14/08, C23C 14/18, B32B 17/10

(54) **PROCEDE DE FABRICATION D UN VITRAGE POURVU D'UN REVETEMENT MULTICOUCHE**
VERFAHREN ZUR HERSTELLUNG EINES MIT EINEM MEHRSCHICHTIGEN ÜBERZUG VERSEHENEN GLASIERTEN TEILS
METHOD FOR PRODUCTION OF A GLAZED PIECE PROVIDED WITH A MULTI-LAYER COATING

(30) Priorité: 17.06.2002 EP 02077435
(43) Date de publication de la demande: 30.03.2005
(73) Titulaire: AGC Glass Europe, 1348 Louvain-la-Neuve (BE)
(72) Inventeur: DECROUPET, Daniel, GLAVERBEL - Centre R & D, B-6040 Jumet (BE); DEPAUW, Jean-Michel, GLAVERBEL - Centre R & D, B-6040 Jumet (BE)
(74) Mandataire: Agustsson, Sveinn Otto
(86) Numéro de dépôt international: PCT/EP2003/050227
(87) Numéro de publication internationale: WO 2003/106363

(56) Documents cités:
- EP-A- 0 304 234
- EP-A- 0 870 601
- EP-A- 1 174 397
- WO-A-01/27050
- WO-A1-93/19936
- US-A- 5 279 722
- US-A- 5 935 702

## Description

L'invention se rapporte à un procédé de fabrication d'un vitrage pourvu d'un revêtement multicouche, déposé sur un substrat en verre par pulvérisation cathodique sous pression réduite, apte à subir un traitement thermique à température élevée, tel qu'une opération de bombage, de recuit ou de trempe thermique, ainsi qu'à un vitrage pourvu d'un revêtement multicouche apte à subir un traitement thermique à température élevée.

Les vitrages pourvus d'un revêtement multicouche dont il est fait référence dans la présente invention sont utilisés pour améliorer l'isolation thermique des grandes surfaces vitrées et réduire ainsi les déperditions d'énergie et les coûts de chauffage en période froide. Le revêtement multicouche est un revêtement à faible émissivité qui réduit la déperdition de chaleur par rayonnement infrarouge de grande longueur d'onde. Ces vitrages peuvent aussi être utilisés en tant que protection solaire pour réduire le risque de surchauffe excessive, d'un espace clos ayant de grandes surfaces vitrées, dû à l'ensoleillement et ainsi réduire l'effort de climatisation à consentir en été.

Ces vitrages sont destinés à équiper aussi bien des bâtiments que des véhicules automobiles. On est parfois amené à effectuer une opération de renforcement mécanique du vitrage, telle qu'une trempe thermique, pour améliorer sa résistance aux contraintes mécaniques. Dans le domaine de l'automobile par exemple, on est aussi souvent amené à bomber le vitrage, notamment pour réaliser la mise en forme d'un pare-brise.

Dans les processus de fabrication et de mise en forme des vitrages, il y a certains avantages à effectuer ces opérations de trempe et de bombage sur le substrat déjà revêtu au lieu de revêtir un substrat déjà mis en forme. Toutefois, ces opérations sont réalisées à une température relativement élevée, température à laquelle le revêtement à tendance à se détériorer et à perdre ses propriétés optiques et ses propriétés vis-à-vis du rayonnement infrarouge.

On constate que la détérioration du revêtement multicouche est parfois due à une oxydation de la couche destinée à réfléchir le rayonnement infrarouge au cours du traitement thermique. Une solution souvent proposée pour tenter de résoudre ce problème et d'obtenir un vitrage qui ait les caractéristiques requises après traitement thermique est de prévoir une couche de métal sacrificiel judicieusement disposée à l'intérieur du revêtement. Ce métal sacrificiel s'oxyde à la place de la couche destinée à réfléchir le rayonnement infrarouge tout en la protégeant.

Un exemple de cette solution est proposé par le brevet EP 233 003 B1 qui décrit un empilage de couches à base d'argent comme réflecteur infrarouge entouré d'oxyde d'étain. Ce brevet prévoit une couche de métal additionnel, sélectionné parmi l'aluminium, le titane, le zinc et le tantale, déposée sur la couche d'argent, et éventuellement aussi sous l'argent. Ce métal additionnel capte l'oxygène et s'oxyde au cours du traitement thermique en protégeant ainsi l'argent de l'oxydation.

Sous sa forme métallique, le métal additionnel est absorbant, ce qui tend à réduire la transmission lumineuse du revêtement. En vue d'obtenir un produit fini à transmission lumineuse élevée, ce brevet propose dès lors d'utiliser la quantité de métal juste suffisante pour protéger la couche d'argent tout au long du traitement thermique tout en évitant qu'il ne reste du métal additionnel absorbant dans le produit fini. La quantité de métal additionnel à prévoir dépend donc de la température et de la durée du traitement thermique.

Avec la solution proposée par le brevet EP 233 003 B1, il est difficile d'obtenir un produit de qualité constante pendant une longue période de production, et, pour des vitrages de forme complexe, il peut être difficile d'obtenir une qualité uniforme sur toute la surface. De plus, lorsqu'il faut bomber ou tremper des vitrages d'épaisseurs ou de formes différentes, les conditions de température et de temps du traitement thermique doivent être modifiées et il est dès lors nécessaire de changer l'épaisseur de métal additionnel pour s'adapter à ces modifications des conditions de traitement.

L'invention se rapporte à un procédé de fabrication d'un vitrage pourvu d'un revêtement multicouche, déposé sur un substrat en verre par pulvérisation cathodique sous pression réduite, selon la revendication 1.

Les valeurs d'électronégativité des éléments telles qu'utilisées dans la présente invention sont des valeurs moyennes classées selon l'échelle de Pauling et obtenues à partir de données thermochimiques. A titre de clarification, les valeurs d'électronégativité sont reprises ci-après pour les quelques éléments suivants :

| | | | | | | | |
|---|---|---|---|---|---|---|---|
| Ag | 1,93 | Au | 2,54 | Pd | 2,20 | Pt | 2,28 |
| Al | 1,61 | O₂ | 3,44 | Si | 1,90 | Ti | 1,54 |
| Cr | 1,66 | Ni | 1,90 | Cu | 1,65 | Zn | 1,81 |
| Zr | 1,33 | Sn | 1,96 | Sb | 2,05 | Pb | 2,33 |
| Bi | 2,02 | Ta | 1,5 | Hf | 1,3 | In | 1,78 |

Les couches transparentes diélectriques ont pour but premier de réduire la réflexion lumineuse du revêtement par effet d'interférence, car la couche fonctionnelle à base d'un matériau qui réfléchit le rayonnement infrarouge a tendance à réfléchir aussi le rayonnement visible. Elles favorisent l'obtention d'un vitrage réfléchissant l'infrarouge à haute transmission lumineuse. Ces couches diélectriques transparentes assurent aussi une certaine protection de la couche fonctionnelle contre les agressions physiques ou chimiques externes et celle déposée sur le substrat joue un rôle favorable dans l'adhérence du revêtement au vitrage. Ces couches transparentes diélectriques agissent également sur la teinte en transmission et en réflexion du produit obtenu.

Selon l'invention, le matériau de la première couche de protection déposé directement sur la couche fonctionnelle possède une avidité limitée vis-à-vis de l'oxygène, puisque la différence d'électronégativité avec l'oxygène est inférieure à 1,9, tout en restant plus avide d'oxygène que le matériau réfléchissant le rayonnement infrarouge pour éviter le passage d'oxygène au dit matériau. Ceci est contraire à l'enseignement de l'art antérieur, puisque ce dernier nous enseigne qu'il faut protéger la couche fonctionnelle par une couche avide d'oxygène, tel que Ti ou Ta, qui va absorber l'oxygène pour éviter que ce ne soit la couche fonctionnelle qui s'oxyde en perdant de ce fait ses propriétés essentielles.

Nous avons trouvé que, de manière surprenante, l'invention fournit un procédé de fabrication qui favorise l'obtention d'un vitrage de qualité stable et homogène. Avec le procédé selon l'invention on peut obtenir un vitrage pourvu d'un revêtement multicouche qui est particulièrement apte à alimenter une chaîne de fabrication où il doit subir un traitement thermique à température élevée, tel qu'une opération de bombage, de recuit ou de trempe thermique. En effet, même si les conditions de durée et de température du traitement thermique changent sensiblement en cours de fabrication ou d'une campagne de fabrication à l'autre, ces changements auront nettement moins d'influence sur les propriétés optiques et calorifiques du vitrage fini que selon l'art antérieur, voire aucune influence si la structure du revêtement est judicieusement choisie. Le procédé selon l'invention permet dès lors de ne pas devoir modifier la structure du revêtement selon les caractéristiques du traitement thermique que le vitrage doit subir.

Un autre avantage de l'invention est qu'en choisissant judicieusement les couches diélectriques transparentes, le procédé selon l'invention permet l'obtention d'un vitrage pourvu d'un revêtement multicouche dont les propriétés optiques évoluent peu ou non significativement pendant le traitement thermique, de telle sorte qu'un vitrage ayant subi un traitement thermique pourra être juxtaposé à un vitrage provenant du même procédé de fabrication selon l'invention mais n'ayant pas subi de traitement thermique sans différence esthétique indésirable.

La raison de cet effet surprenant n'est pas bien comprise. On pense toutefois que la juxtaposition des première et seconde couches de protection sur la couche fonctionnelle, dans les conditions spécifiée par l'invention, joue un rôle fondamental. On pense notamment que comme le matériau de la première couche de protection est relativement peu avide d'oxygène, son degré d'oxydation ne varie pas brutalement, il n'atteint pas trop vite la saturation et forme un écran stable pour la couche fonctionnelle. Etant donné qu'elle est mince, puisque son épaisseur géométrique ne dépasse pas 3 nm, la première couche de protection peut avoir un impact limité sur l'absorption du revêtement et il est plus facile d'obtenir un niveau d'oxydation suffisant pour une bonne transparence. Cette première couche de protection joue ainsi un rôle stabilisant sur les propriétés du revêtement. Le matériau de la seconde couche de protection est quant à lui suffisamment avide d'oxygène pour avoir tendance à retenir son oxygène et à ne pas s'en séparer trop facilement, ce qui permet l'utilisation d'une faible épaisseur pour la première couche de protection.

De préférence, la première couche de protection est composée d'un matériau dont la différence d'électronégativité avec l'oxygène est inférieure à 1,8, et de préférence inférieure à 1,7. En adoptant de telles différences d'électronégativité par rapport à l'oxygène, on tend à renforcer l'effet stabilisant de la première couche.

De préférence, la seconde couche de protection est composée d'un matériau dont la différence d'électronégativité avec l'oxygène est supérieure à 1,6, et de préférence supérieure à 1,8. On renforce ainsi l'attrait de la seconde couche vis-à-vis de l'oxygène, de sorte qu'elle conserve plus aisément son oxygène pendant un traitement thermique, empêchant ainsi la diffusion de l'oxygène vers la couche fonctionnelle.

De préférence, la valeur de l'électronégativité du matériau de la première couche de protection est inférieure d'au moins 0,05 à celle du matériau réfléchissant le rayonnement infrarouge. Ceci réduit le risque du passage de l'oxygène de la première couche de protection vers la couche fonctionnelle pendant un traitement thermique.

De préférence, le matériau de la seconde couche de protection possède une valeur d'électronégativité inférieure, de préférence d'au moins 0,1 et avantageusement d'au moins 0,2, à la valeur d'électronégativité du matériau de la première couche de protection.

On a découvert que le fait d'utiliser comme matériau de la seconde couche de protection un matériau dont la valeur de l'électronégativité est plus faible que celle du matériau de la première couche renforce l'effet bénéfique de l'invention. On pense que la différence entre les deux matériaux réduit le risque de passage d'oxygène vers la couche fonctionnelle pendant un traitement thermique par le fait que la seconde couche de protection est plus avide d'oxygène que la première couche de protection et que dès lors la seconde couche de protection tend à conserver plus facilement l'oxygène.

La couche fonctionnelle à base d'un matériau réfléchissant le rayonnement infrarouge est généralement une couche métallique par exemple à base d'aluminium, de cuivre, de zinc, de nickel ou d'un métal noble tel que l'or, l'argent, le platine ou le palladium. Selon l'invention, le matériau réfléchissant le rayonnement infrarouge est un matériau à base d'argent. L'argent est un matériau bien adapté pour être utilisé en tant que couche fonctionnelle étant donné ses excellentes propriétés de réflexion de l'infrarouge par rapport à son prix de revient et à la facilité d'utilisation dans les dispositifs de dépôt de couche par pulvérisation cathodique sous pression réduite. Il peut s'agir d'argent pur, d'un alliage d'argent par exemple avec du cuivre, de l'aluminium, ou d'argent avec une petite quantité, de l'ordre de 0,5 à 5% de palladium, de cuivre, d'aluminium, d'or ou de platine, de préférence de palladium.

La première couche de protection est à base d'un matériau choisi parmi le zinc, le cuivre, le nickel, le chrome, l'indium, l'inox et leurs alliages, à l'état métallique ou sous-oxydé.

De préférence, la première couche de protection est à base de Ni, et avantageusement un alliage à base de NiCr. Un alliage qui est particulièrement bien adapté est l'alliage NiCr 80/20. L'alliage de Ni peut être déposé à l'état métallique pur ou à l'état sous-oxydé, nitruré ou sous la forme d'un oxynitrure. On a trouvé que ce matériau était particulièrement bien adapté pour former une première couche de protection stabilisante sous une très faible épaisseur favorable à l'obtention d'un vitrage à haute transmission lumineuse.

Le matériau de la seconde couche de protection est choisi parmi le titane, l'aluminium ou le tantale et leurs alliages, avantageusement le titane. Ces éléments retiennent fortement l'oxygène et forment des oxydes transparents, ils sont dès lors très appropriés en tant que seconde couche de protection aux fins de l'invention.

De préférence, la première couche de protection est déposée selon une épaisseur comprise entre 0,5 nm et 2,5 nm, avantageusement 0,5 nm et 2 nm, et de manière optimum 0,6 nm et 1,5 nm. On obtient ainsi le meilleur effet stabilisant dont il a été question ci-dessus.

De préférence, la seconde couche de protection est déposée selon une épaisseur comprise entre 2 nm et 6 nm. On a trouvé que cette gamme d'épaisseurs pour le matériau de la seconde couche de protection était favorable pour retenir l'oxygène et protéger la couche fonctionnelle.

Le matériau de la seconde couche de protection peut être déposé sous forme de métal ou de sous-oxyde à partir d'une cible métallique dans une atmosphère neutre ou légèrement oxydante. Il peut aussi être déposé à partir d'une cible céramique formée par un oxyde métallique dans une atmosphère relativement neutre, par exemple contenant de 10 à 20% d'oxygène, le reste étant formé d'argon. Il est avantageusement ensuite substantiellement totalement oxydé par le plasma oxydant lors du dépôt d'un oxyde métallique formant partie de la seconde couche diélectrique transparente, de telle sorte qu'il soit transparent après dépôt, ce qui facilite l'obtention d'une transmission lumineuse élevée. Après dépôt du revêtement dans sa totalité, la seconde couche de protection est avantageusement formée de TiO₂, Ta₂O₅ ou Al₂O₃.

Si la couche suivante est une couche diélectrique déposée dans une atmosphère active d'azote ou d'un mélange azote-oxygène, la seconde couche de protection pourra par exemple être un nitrure ou oxynitrure après dépôt du revêtement, tel que AlN ou AlNₓO_{y} qui sont transparents.

Si l'objectif visé, en ce qui concerne les propriétés optiques finales du vitrage produit, est une transmission lumineuse plus faible, la seconde couche de protection peut rester partiellement absorbante et comporter des composés absorbants tels que TiN ou CrN ou réfléchissants tel que ZrN.

Les éléments cités pour la seconde couche de protection sont plus avides d'oxygène que d'azote. Même s'ils sont partiellement ou totalement nitrurés, ils restent avides d'oxygène et donc aptes à capter l'oxygène et à le conserver.

De préférence toutefois, le matériau de la seconde couche de protection est déposé sous forme métallique ou sous-oxydée et il est oxydé totalement par le plasma oxydant du dépôt de la couche suivante. On peut ainsi déposer un oxyde à partir d'une cible métallique pour former la seconde couche diélectrique transparente.

De préférence, la seconde couche diélectrique transparente est constituée à base d'un élément différent du matériau de la seconde couche de protection. Ceci facilite le choix d'éléments spécifiquement mieux adaptés aux rôles différents joués par les deux couches différentes.

Les première et seconde couches diélectriques transparentes peuvent être formées par tout oxyde, carbure, oxycarbure, nitrure ou oxynitrure transparent utilisé de manière connue en soi dans le domaine des revêtements formés par pulvérisation cathodique sous pression réduite. On peut citer notamment les nitrures, oxynitrures ou oxydes de silicium, chrome, zirconium ou d'aluminium ; les carbures ou oxycarbures de titane de tantale ou de silicium ; les carbures ou oxycarbures de chrome ; les oxydes d'étain, de zinc, de titane, de bismuth, de magnésium, de tantale, de niobium, d'indium ; ainsi que les alliages de ces différents éléments. Certains éléments peuvent aussi être avantageusement dopés, tel que par exemple l'oxyde de zinc ou de silicium dopé à l'aluminium.

De préférence, au moins une des première et seconde couches diélectriques transparentes comprend un oxyde métallique à base de zinc. Lorsque l'argent est utilisé comme matériau réfléchissant l'infrarouge, cet oxyde métallique a un effet bénéfique de passivation de l'argent, ce qui rend la couche fonctionnelle plus résistante à la dégradation chimique, par exemple au cours d'un traitement thermique. Le zinc est aussi un métal qui se prête bien à la pulvérisation cathodique à pression réduite.

De préférence, le dit oxyde métallique est un oxyde d'un alliage à base de zinc et d'étain. Comme indiqué ci-dessus, l'oxyde de zinc est particulièrement avantageux. Toutefois, il a tendance à devenir poreux sous forte épaisseur. Un alliage zinc-étain est particulièrement avantageux car il réduit cette tendance. Avantageusement, au moins une des première et seconde couches diélectriques comprend deux couches d'oxyde d'alliages à base de zinc et d'étain dans des proportions différentes. On peut ainsi adapter judicieusement la proportion de zinc dans l'alliage de telle sorte que le diélectrique le plus proche de la couche fonctionnelle ait la concentration la plus élevée en zinc pour favoriser l'effet bénéfique du zinc et de telle sorte que l'autre partie du diélectrique ait une plus faible concentration en zinc pour réduire le risque de porosité de la couche.

Avantageusement, chacune des première et seconde couches diélectriques comprend un oxyde métallique à base de zinc. L'effet bénéfique du zinc est ainsi mieux assuré pour l'ensemble du revêtement.

Dans ce qui précède, on n'a fait référence qu'à une seule couche fonctionnelle. Ce type de revêtement permet d'obtenir aisément des vitrages à faible émissivité très utiles pour l'isolation thermique en périodes froides. En épaississant la couche fonctionnelle, on peut aussi obtenir un vitrage à protection solaire renforcée. Toutefois, lorsque l'on veut renforcer la protection solaire tout en conservant une transmission très élevée, avec un aspect esthétique précis, comme c'est le cas en général pour un pare-brise de véhicule automobile, il est nécessaire de déposer deux, voire trois, couches fonctionnelles. Dès lors, dans une réalisation préférée du procédé selon l'invention, on dépose au moins deux couches fonctionnelles à base d'argent réfléchissant le rayonnement infrarouge suivie chacune par le dépôt de premières et secondes couches de protection et on dépose au moins une couche intermédiaire diélectrique entre les dites couches fonctionnelles.

Avantageusement, on termine le revêtement multicouche en y déposant une mince couche finale de protection à base de chrome, molybdène, inox, nickel ou titane, ainsi que leurs alliages, et de préférence à base de titane. On obtient ainsi une protection efficace contre les griffes.

L'invention s'étend à un procédé de fabrication d'un vitrage bombé ou trempé pourvu d'un revêtement multicouche, caractérisé en ce qu'un substrat revêtu selon le procédé décrit ci-dessus est ensuite soumis à une opération de bombage ou de trempe.

Selon un autre aspect, l'invention se rapporte à un vitrage pourvu d'un revêtement multicouche, selon la revendication 9.

Selon encore un autre aspect, l'invention se rapporte à un vitrage bombé ou trempé pourvu d'un revêtement multicouche, selon la revendication 11. Selon cet aspect de l'invention, on entend par « vitrage bombé ou trempé pourvu d'un revêtement mufticouche » que le traitement thermique de trempe ou de bombage a eu lieu après l'opération de dépôt de couche, c'est donc un substrat déjà revêtu qui a été soumis au processus de trempe ou de bombage.

Les caractéristiques discutées ci-dessus sous l'aspect procédé de l'invention relatives à la structure, à la constitution et à la succession des différentes couches s'appliquent également aux aspects relatifs aux vitrages avant et après traitement thermique.

Des modes de réalisation préférés de l'invention seront maintenant décrits avec l'aide de quelques exemples nullement limitatifs.

### Exemple 1.

Une feuille de verre sodo-calcique ordinaire de 2 m sur 1 m et de 4 mm d'épaisseur est placée dans un dispositif de pulvérisation cathodique à pression réduite du type magnétron fabriqué par la société BOC. Elle pénètre tout d'abord dans une première chambre de pulvérisation dans laquelle l'atmosphère est constituée de 20% d'argon et de 80% d'oxygène sous une pression fortement réduite, par rapport à la pression atmosphérique. Sur la feuille de verre, on dépose tout d'abord une première couche diélectrique transparente. A partir d'une cathode d'un alliage zinc-étain à 52% de zinc et 48% d'étain, on dépose en premier lieu une couche de ZnSnOₓ de 20 nm d'épaisseur. Dans une atmosphère similaire, on dépose ensuite, sur la couche de ZnSnOₓ, une autre couche de ZnSnOₓ de 12 nm à partir d'une cible d'un alliage zinc-étain à 90% de zinc et 10% d'étain. La feuille de verre passe ensuite dans une autre chambre de pulvérisation où l'atmosphère est constituée à 100% d'argon. On y dépose, sur la couche de ZnSnOₓ, une couche fonctionnelle formée de 10 nm d'argent à partir d'une cible d'argent pratiquement pur. Dans cette même atmosphère, on dépose ensuite sur l'argent une première couche de protection formée, dans le présent exemple, d'une couche de NiCr de 1 nm d'épaisseur à partir d'une cible d'un alliage à 80% de Ni et à 20% de Cr. Dans une atmosphère à 10% d'oxygène et 90% d'argon, on dépose ensuite sur la couche de NiCr une seconde couche de protection constituée ici par une couche de TiOₓ de 5 nm d'épaisseur, à partir d'une cible céramique de TiOₓ, x étant compris entre 1,6 et 1,9. On dépose ensuite sur la couche de TiOₓ, dans une autre chambre où l'atmosphère est oxydante, soit 80% d'oxygène et 20% d'argon, une seconde couche diélectrique transparente. Pour cela, on dépose tout d'abord une couche de ZnSnOₓ de 10 nm d'épaisseur à partir d'une cible métallique d'un alliage de ZnSn à 90% de Zn et 10% de Sn. Il est à noter que l'atmosphère oxydante du plasma achève l'oxydation de la couche inférieure de TiOₓ de telle sorte qu'à la fin du processus de dépôt de la couche de ZnSnOₓ, le titane est substantiellement totalement oxydé pour former une barrière compacte de TiO₂. Le dépôt de la seconde couche diélectrique transparente se poursuit par le dépôt d'une couche de ZnSnOₓ de 15 nm d'épaisseur dans une atmosphère à 80% d'oxygène et 20% d'argon à partir d'une cible d'un alliage de ZnSn à 52% de Zn et 48% de Sn. Le revêtement est ensuite finalisé par le dépôt d'une couche final de protection de TiOₓ de 3 nm. Il faut noter que toutes les couches de ZnSnOₓ sont suffisamment oxydées pour être le plus transparent possible.

Lorsqu'il sort du dispositif de dépôt de couche, le vitrage fraîchement revêtu présente les propriétés suivantes lorsqu'il est observé côté couche :
TL= 80% ; L=23 ; a=-2 ; b=-13 ; émissivité=0,08.

Le vitrage revêtu est soumis à une opération de trempe thermique au cours de laquelle il est soumis pendant 4 minutes à une température de 690°C puis refroidi brutalement par des jets d'air froid. Pendant ce traitement thermique, la couche de NiCr s'oxyde suffisamment pour être transparente tout en constituant un écran efficace et stable pour protéger l'argent. Il semble que la couche TiO₂ quant à elle conserve son oxygène puisque, comme on va le voir ci-après dans les propriétés du revêtement après trempe, la couche d'argent ne s'est pas oxydée malgré l'épaisseur très mince de l'écran NiCr. La combinaison des première et seconde couches de protection a donc eu un effet particulièrement bénéfique vis-à-vis de la couche fonctionnelle d'argent.

Après ce traitement, le vitrage revêtu et trempé présente les propriétés suivantes, lorsqu'on l'observe côté couche :
TL= 88% ; L=24,4 ; a=-1,6 ; b=-8,6 ; émissivité=0,05 ;
la résistivité électrique superficielle de la couche est de 3,8 ohms par carré et le coefficient k (« U value ») est inférieur à 1,2 W/m².K.

Ce vitrage revêtu est ensuite assemblé en double vitrage avec une autre feuille de verre clair de 4 mm, le revêtement étant disposé côté de l'espace intérieur du double vitrage. En observant le double vitrage côté couche disposée en position 3, c'est-à-dire qu'on voit d'abord la feuille de verre clair sans couche, puis le vitrage pourvu du revêtement observé côté couche, on note les propriétés suivantes : TL= 79,2% ; L=34,5 ; a=-1,4 ; b=-4.

Dans cet exemple, ainsi que dans les exemples suivants sauf indication contraire, les transmissions lumineuses (TL) sont établies sous l'illuminant C et les valeurs L, a, b sont les valeurs selon le système Lab de Hunter.

A titre de variante, la seconde couche de protection de TiOₓ a été déposée à partir d'une cible métallique en atmosphère de 20% d'oxygène au lieu d'utiliser une cible céramique, toute autre chose restant égale. Les propriétés obtenues pour le vitrage revêtu étaient identiques.

### Exemple 2.

On réalise le dépôt d'un revêtement par un procédé de dépôt en tout point identique au procédé décrit dans l'exemple 1, excepté qu'il est réalisé sur une feuille de verre dont l'épaisseur est 6 mm au lieu de 4 mm. Le vitrage pourvu de son revêtement est soumis à une opération de trempe thermique au cours de laquelle il est soumis pendant 6 minutes à une température de 690°C puis refroidi brutalement par des jets d'air froid. Après ce traitement, le vitrage revêtu et trempé présente les propriétés suivantes, en observation côté couche :
TL= 87,4% ; L=23,1 ; a=-1,3 ; b=-8,9 ; émissivité=0,05 ;
la résistivité électrique superficielle de la couche est de 3,7 ohms par carré. Ce vitrage revêtu est ensuite assemblé en double vitrage avec une autre feuille de verre clair de 4 mm, le revêtement étant disposé côté de l'espace intérieur du double vitrage. En observant le double vitrage côté couche disposée en position 3, on note les propriétés suivantes :
   TL= 77,8% ; L=34,0 ; a=-1,2 ; b=-4,2.

En comparant les exemples 1 et 2, on constate que, pour un même procédé de dépôt de couche avec une même structure de revêtement, le changement des conditions de température et de durée de l'opération de trempe thermique entre les deux exemples n'a pas significativement modifié les propriétés optiques, colorimétriques et thermiques. Le procédé selon l'invention permet donc de réaliser un revêtement stable qui est peu dépendant du traitement thermique qu'il subit.

### Exemple 3.

On réalise le dépôt d'un revêtement par un procédé de dépôt en tout point identique au procédé décrit dans l'exemple 1, excepté qu'il est réalisé sur une feuille de verre dont l'épaisseur est 8 mm au lieu de 4 mm.

Le vitrage pourvu de son revêtement est soumis à une opération de trempe thermique au cours de laquelle il est soumis pendant 8 minutes à une température de 690°C puis refroidi brutalement par des jets d'air froid. Après ce traitement, le vitrage revêtu et trempé présente les propriétés suivantes, en observation côté couche :
TL= 86,4% ; L=23,3 ; a=-1,6 ; b=-9,4 ; émissivité=0,05 ;
la résistivité électrique superficielle de la couche est de 3,6 ohms par carré.

Ce vitrage revêtu est ensuite assemblé en double vitrage avec une autre feuille de verre clair de 4 mm, le revêtement étant disposé côté de l'espace intérieur du double vitrage. En observant le double vitrage côté couche disposée en position 3, on note les propriétés suivantes :
TL= 77,4% ; L=34,0 ; a=-1,2 ; b=-4,0.

En comparant les exemples 1 et 3, on constate que, pour un même procédé de dépôt de couche avec une même structure de revêtement, le changement des conditions de température et de durée de l'opération de trempe thermique entre les deux exemples n'a pas significativement modifié les propriétés optiques, colorimétriques et thermiques, bien que le temps à température élevée ait doublé. Le procédé selon l'invention permet donc de réaliser un revêtement stable qui est peu dépendant du traitement thermique qu'il subit.

### Exemple 4.

Dans un dispositif de pulvérisation cathodique à pression réduite du type magnétron, on dépose, sur une feuille de verre de 6 mm, un revêtement selon la séquence suivante. On dépose une première couche diélectrique transparente formée par une couche de nitrure d'aluminium de 10 nm d'épaisseur suivie par une couche d'oxyde de zinc dopé avec 5% d'aluminium d'une épaisseur de 20 nm. Le nitrure d'aluminium est déposé à partir d'un cible d'aluminium dans une atmosphère composée de 60% d'argon et 40% d'azote. L'oxyde de zinc est déposé à partir d'une cible de zinc dopé avec 5% d'aluminium dans une atmosphère formée de 70% d'oxygène et 30% d'argon. On dépose ensuite, en atmosphère neutre formée de 95% d'argon et 5% d'oxygène, une couche fonctionnelle constituée de 10,5 nm d'argent dopé avec 1% de palladium. Dans la même atmosphère neutre, on dépose une première couche de protection formée de 0,8 nm de zinc, puis une seconde couche de protection constituée par 4 nm de tantale. On dépose ensuite une seconde couche diélectrique transparente formée de 15 nm d'oxyde de zinc dopé avec 5% d'aluminium suivi de 17 nm de nitrure de silicium. L'oxyde de zinc dopé aluminium est déposé en atmosphère oxydante de 70% O₂ et 30% Ar, et Si₃N₄ est déposé sous 40% d'Ar et 60% d'azote.

Les propriétés du vitrage revêtu après dépôt sont les suivantes lorsqu'il est observé côté couche :
TL= 84% ; L=25 ; a=0 ; b=-12 ; émissivité= 0,06.

Ce vitrage revêtu est ensuite assemblé en double vitrage avec une autre feuille de verre clair de 6 mm, le revêtement étant disposé côté de l'espace intérieur du double vitrage. En observant le double vitrage côté couche disposée en position 3, on note les propriétés suivantes :
TL= 75% ; L=36 ; a=0 ; b=-6.

Le vitrage simple pourvu de son revêtement est soumis à une opération de trempe thermique au cours de laquelle il est soumis pendant 6 minutes à une température de 690°C puis refroidi brutalement par des jets d'air froid. Après ce traitement, le vitrage revêtu et trempé présente les propriétés suivantes, en observation côté couche :
TL= 86% ; L=23 ; a=-1 ; b=-10 ; émissivité=0,04 ;
la résistivité électrique superficielle de la couche est de 3,4 ohms par carré.

En analysant les propriétés du vitrage, on observe que le revêtement a très bien supporté l'opération de trempe sans dégradation de la couche fonctionnelle.

Ce vitrage revêtu et trempé est ensuite assemblé en double vitrage avec une autre feuille de verre clair de 6 mm, le revêtement étant disposé côté de l'espace intérieur du double vitrage. En observant le double vitrage côté couche disposée en position 3, on note les propriétés suivantes :
TL= 77% ; L=34; a=-1 ; b=-5.

Il est remarquable que les propriétés optiques n'aient pratiquement pas changé et que les vitrages trempés ou non sont tout à fait juxtaposables sur le même bâtiment.

### Exemple 5.

Dans un dispositif de pulvérisation cathodique à pression réduite du type magnétron, on dépose, sur une feuille de verre de 2 mm d'épaisseur, un revêtement selon la séquence suivante. On dépose une première couche diélectrique transparente de 30 nm d'épaisseur constituée par un oxyde mixte zinc-étain déposé à partir d'une cible métallique d'un alliage zinc-étain 90% de zinc, 10% d'étain, dans une atmosphère à 100% d'oxygène. On dépose ensuite une couche fonctionnelle de 10 nm d'argent en atmosphère neutre à 100% d'argon. Sur la couche d'argent, on dépose une première couche de protection de 0,7 nm de NiCr 80/20 en atmosphère de 100% d'argon. Sur cette première couche de protection, on dépose une seconde couche de protection de 3 nm de TiOₓ à partir d'une cible de titane métallique sous une atmosphère à 20% d'oxygène. On dépose ensuite une couche intermédiaire diélectrique transparente constituée par 70 nm de ZnSnOₓ de la même manière que la première couche diélectrique transparente. La couche TiOₓ est oxydée totalement par le plasma de dépôt de ZnSnOₓ. On dépose une seconde couche fonctionnelle de 10 nm d'argent suivi de 1,5 nm d'une première couche de protection en NiCr, les deux couches étant déposées dans une atmosphère à 5% d'oxygène. Puis on dépose 2,5 nm d'une seconde couche de protection de TiOₓ à partir d'une cible métallique dans 20% d'oxygène. Le second diélectrique transparent est formé par 20 nm de ZnSnOₓ déposé dans 100% d'oxygène. Le plasma du dépôt de second diélectrique oxyde complètement la couche sous-jacente de TiOₓ. Une couche finale de protection à base de titane de 3 nm est déposée pour protéger le revêtement.

Les propriétés du vitrage revêtu après dépôt sont les suivantes lorsqu'il est observé côté couche :
TL= 60% ; L=45 ; a=+3; b=+11 ; émissivité= 0,05.

Le vitrage selon cet exemple est destiné à former un pare-brise de véhicule automobile dont le revêtement assure une protection solaire pour éviter l'échauffement excessif de l'habitacle.

Le vitrage revêtu est soumis à une opération de bombage de 12 minutes à 650°C pour lui imposer la forme que doit avoir le pare-brise.

Après ce traitement, le vitrage revêtu et bombé présente les propriétés suivantes, en observation côté couche :
TL= 74% ; L=39 ; a=+5 ; b=+9 ; émissivité= 0,02 ;
la résistivité électrique superficielle de la couche est de 2,4 ohms par carré, valeur avantageuse pour servir de couche chauffante.

Le vitrage revêtu et bombé est ensuite assemblé en vitrage feuilleté avec une feuille de verre clair de 2 mm d'épaisseur à l'aide d'un film de PVB de 0,76 mm.

Les propriétés du vitrage feuilleté avec la couche en position 2 (la position 1 étant la face extérieure par rapport au pare-brise installé sur le véhicule) sont les suivantes :
TL= 75,5% ; L=35 ; a=-3 ; b=-4 ; Transmission énergétique TE selon Moon = 45% ; Réflexion énergétique RE selon Moon = 34% ;
la transmission lumineuse étant ici déterminée sous l'illuminant A.

On constate que le revêtement a très bien supporté l'opération de bombage.

## Revendications

1. Procédé de fabrication d'un vitrage pourvu d'un revêtement multicouche, déposé sur un substrat en verre par pulvérisation cathodique sous pression réduite, **caractérisé en ce qu'**on dépose sur le substrat au moins une première couche diélectrique transparente suivie par le dépôt d'une couche fonctionnelle à base d'argent réfléchissant le rayonnement infrarouge, **en ce qu'**on dépose sur la dite couche fonctionnelle, sous une atmosphère comprenant au plus 20% d'oxygène, une première couche de protection d'au plus 3 nm d'épaisseur géométrique à base d'un matériau choisi parmi le zinc, le cuivre, le nickel, le chrome, l'indium, l'inox et leurs alliages, à l'état métallique ou sous-oxydé, ou un alliage à base de Ni déposé à l'état métallique pur ou à l'état sous-oxydé, nitruré ou sous la forme d'un oxynitrure, suivie du dépôt, sous une atmosphère comprenant au plus 50% d'oxygène, d'une seconde couche de protection d'au plus 7 nm d'épaisseur géométrique composée d'un matériau choisi parmi le titane, l'aluminium ou le tantale et leurs alliages, sous forme métallique, nitrurée, sous-oxydée ou oxydée, et **en ce qu'**on dépose ensuite au moins une seconde couche diélectrique transparente.

2. Procédé selon la revendication 1, **caractérisé en ce que** la première couche de protection est à base de NiCr, de préférence à base d'un alliage NiCr 80/20.

3. Procédé selon l'une quelconque des revendications 1 à 2, **caractérisé en ce que** le matériau de la seconde couche de protection est le titane.

4. Procédé selon l'une quelconque des revendications 1 à 3, **caractérisé en ce que** la première couche de protection est déposée selon une épaisseur comprise entre 0,5 nm et 2,5 nm, de préférence 0,5 nm et 2 nm, et avantageusement 0,6 nm et 1,5 nm.

5. Procédé selon l'une quelconque des revendications 1 à 4, **caractérisé en ce que** la seconde couche de protection est déposée selon une épaisseur comprise entre 2 nm et 6 nm.

6. Procédé selon l'une quelconque des revendications 1 à 5, **caractérisé en ce qu'**on dépose au moins deux couches fonctionnelles à base d'argent réfléchissant le rayonnement infrarouge suivies chacune par le dépôt de premières et secondes couches de protection et **en ce qu'**on dépose au moins une couche intermédiaire diélectrique entre les dites couches fonctionnelles.

7. Procédé selon l'une quelconque des revendications 1 à 6, **caractérisé en ce que**, pour terminer le revêtement multicouche, on dépose une couche finale de protection à base de titane.

8. Procédé de fabrication d'un vitrage bombé ou trempé pourvu d'un revêtement multicouche, **caractérisé en ce qu'**un substrat revêtu obtenu par le procédé selon l'une quelconque des revendications 1 à 7 est ensuite soumis à une opération de bombage ou de trempe.

9. Vitrage pourvu d'un revêtement multicouche, **caractérisé en ce qu'**il comprend un substrat en verre sur lequel est déposée au moins une couche fonctionnelle à base d'argent réfléchissant le rayonnement infrarouge, la couche fonctionnelle ou au moins une des couches fonctionnelles étant entourée d'au moins une couche diélectrique transparente, **en ce que** la dite couche fonctionnelle est surmontée, sur sa face opposée au substrat et directement en contact avec elle, d'une première couche de protection d'au plus 3 nm d'épaisseur géométrique à base d'un matériau choisi parmi le zinc, le cuivre, le nickel, le chrome, l'indium, l'inox et leurs alliages, à l'état métallique ou sous-oxydé, ou un alliage à base de Ni déposé à l'état métallique pur ou à l'état sous-oxydé, nitruré ou sous la forme d'un oxynitrure, suivie d'une seconde couche de protection d'au plus 7 nm d'épaisseur géométrique composée d'un matériau choisi parmi le titane, l'aluminium ou le tantale et leurs alliages, sous forme substantiellement totalement oxydée, et qui est différent du matériau de la couche diélectrique transparente qui lui est directement contiguë.

10. Vitrage selon la revendication 9, **caractérisé en ce que** la ou les dites premières couches de protection sont à base d'un alliage de Ni et de Cr, et la ou les dites secondes couches de protection sont formées d'oxyde de titane.

11. Vitrage bombé ou trempé pourvu d'un revêtement multicouche, **caractérisé en ce qu'**il comprend un substrat en verre sur lequel est déposée au moins une couche fonctionnelle à base d'argent réfléchissant le rayonnement infrarouge, la couche fonctionnelle ou au moins une des couches fonctionnelles étant entourée d'au moins une couche diélectrique transparente, **en ce que** la dite couche fonctionnelle est surmontée, sur sa face opposée au substrat et directement en contact avec elle, d'une première couche de protection d'au plus 3 nm d'épaisseur géométrique à base d'un matériau choisi parmi le zinc, le cuivre, le nickel, le chrome, l'indium, l'inox et leurs alliages, à l'état métallique ou sous-oxydé, ou un alliage à base de Ni déposé à l'état métallique pur ou à l'état sous-oxydé, nitruré ou sous la forme d'un oxynitrure, suivie d'une seconde couche de protection d'au plus 7 nm d'épaisseur géométrique composée d'un matériau choisi parmi le titane, l'aluminium ou le tantale et leurs alliages, sous forme substantiellement totalement oxydée et qui est différent du matériau de la couche diélectrique transparente qui lui est directement contiguë.

12. Vitrage selon la revendication 11, **caractérisé en ce que** la ou les dites premières couches de protection sont à base d'un alliage de Ni et de Cr, et la ou les dites secondes couches de protection sont formées d'oxyde de titane, et **en ce qu'**au moins une des couches diélectriques comprend un oxyde à base de zinc, de préférence à base d'un alliage zinc-étain.

13. Vitrage selon l'une quelconque des revendications 9 à 10, **caractérisé en ce qu'**il comprend un substrat en verre sur lequel sont successivement déposées au moins une première couche diélectrique transparente, une couche fonctionnelle à base d'argent, une première couche de protection à base d'un alliage de nickel sous forme métallique, nitrurée, oxydée ou sous-oxydée, directement en contact avec la couche fonctionnelle, une seconde couche de protection à base d'oxyde de titane, déposée sur et en contact avec la première couche de protection, et une seconde couche diélectrique transparente composée d'un matériau différent du matériau de la seconde couche de protection qui lui est directement contiguë.

## Patentansprüche

1. Verfahren zur Herstellung eines mit einem mehrschichtigen Überzug versehenen, glasierten Teils, durch Kathodenzerstäubung unter vermindertem Druck auf einem Substrat aus Glas aufgebracht, **dadurch gekennzeichnet, dass** auf dem Substrat mindestens eine erste dielektrische, transparente Schicht aufgebracht wird, gefolgt vom Aufbringen einer Funktionsschicht auf der Basis von die Infrarotstrahlung reflektierendem Silber, **dadurch, dass** auf die Funktionsschicht unter einer höchstens 20% Sauerstoff umfassenden Atmosphäre eine erste Schutzschicht von höchstens 3 nm geometrischer Dicke auf Basis eines aus Zink, Kupfer, Nickel, Chrom, Indium, nichtrostendem Stahl und Legierungen davon in metallischer oder unteroxidierter Form oder einer Legierung auf Basis von Ni, aufgebracht in reinem metallischem Zustand oder in unteroxidiertem oder nitriertem Zustand oder in Form eines Oxidnitrids, aufgebracht wird, gefolgt vom Aufbringen einer zweiten Schutzschicht von höchstens 7 nm geometrischer Dicke unter einer höchstens 50% Sauerstoff umfassenden Atmosphäre, welche sich aus einem Werkstoff ausgewählt aus Titan, Aluminium oder Tantal und deren Legierungen in metallischer, nitrierter, unteroxidierter oder oxidierter Form zusammensetzt, und **dadurch, dass** dann mindestens eine zweite dielektrische, transparente Schicht aufgebracht wird.

2. Verfahren gemäß Anspruch 1, **dadurch gekennzeichnet, dass** die erste Schutzschicht auf NiCr, vorzugsweise auf einer NiCr-80/20-Legierung, basiert.

3. Verfahren gemäß einem der Ansprüche 1 bis 2, **dadurch gekennzeichnet, dass** es sich bei dem Werkstoff der zweiten Schutzschicht um Titan handelt.

4. Verfahren gemäß einem der Ansprüche 1 bis 3, **dadurch gekennzeichnet, dass** die erste Schutzschicht gemäß einer zwischen 0,5 nm und 2,5 nm, vorzugsweise 0,5 nm und 2 nm und in vorteilhafter Weise 0,6 nm und 1,5 nm umfassenden Dicke aufgebracht wird.

5. Verfahren gemäß einem der Ansprüche 1 bis 4, **dadurch gekennzeichnet, dass** die zweite Schutzschicht gemäß einer zwischen 2 nm und 6 nm umfassenden Dicke aufgebracht wird.

6. Verfahren gemäß einem der Ansprüche 1 bis 5, **dadurch gekennzeichnet, dass** mindestens zwei Funktionsschichten auf der Basis von die Infrarotstrahlung reflektierendem Silber aufgebracht werden, jede gefolgt vom Aufbringen der ersten und zweiten Schutzschicht und **dadurch, dass** mindestens eine dielektrische Zwischenschicht zwischen den Funktionsschichten aufgebracht wird.

7. Verfahren gemäß einem der Ansprüche 1 bis 6, **dadurch gekennzeichnet, dass** eine Abschlussschutzschicht auf Basis von Titan aufgebracht wird, um den mehrschichtigen Überzug fertigzustellen.

8. Verfahren zur Herstellung eines mit einem mehrschichtigen Überzug versehenen, gewölbten oder gehärteten glasierten Teils, **dadurch gekennzeichnet, dass** ein durch das Verfahren gemäß einem der Ansprüche 1 bis 7 erhaltenes, beschichtetes Substrat dann einem Vorgang der Wölbung oder des Abschreckens unterzogen wird.

9. Mit einem mehrschichtigen Überzug versehenes glasiertes Teil, **dadurch gekennzeichnet, dass** es ein Substrat aus Glas umfasst, auf welchem mindestens eine Funktionsschicht auf Basis von die Infrarotstrahlung reflektierendem Silber aufgetragen wird, wobei die Funktionsschicht oder mindestens eine der Funktionsschichten von mindestens einer dielektrischen, transparenten Schicht eingeschlossen ist, und **dadurch, dass** die Funktionsschicht auf ihrer dem Substrat gegenüberliegenden und mit diesem in direktem Kontakt stehenden Seite von einer ersten Schutzschicht von höchstens 3 nm geometrischer Dicke auf Basis eines aus Zink, Kupfer, Nickel, Chrom, Indium, nichtrostendem Stahl und Legierungen davon in metallischer oder unteroxidierter Form oder einer Legierung auf Basis von Ni, aufgebracht in reinem metallischem Zustand oder in unteroxidiertem oder nitriertem Zustand oder in Form eines Oxidnitrids, aufgebracht wird, gefolgt von einer zweiten Schutzschicht von höchstens 7 nm geometrischer Dicke, welche sich aus einem Werkstoff ausgewählt aus Titan, Aluminium oder Tantal und deren Legierungen in im Wesentlichen vollständig oxidierter Form zusammensetzt, und der verschieden von dem Werkstoff der direkt angrenzenden dielektrischen, transparenten Schicht ist.

10. Glasiertes Teil gemäß Anspruch 9, **dadurch gekennzeichnet, dass** die erste oder die ersten Schutzschichten auf einer Ni- und Cr-Legierung basieren, und die zweite oder die zweiten Schutzschichten aus Titanoxid gebildet sind.

11. Gewölbtes oder gehärtetes, mit einem mehrschichtigen Überzug versehenes glasiertes Teil, **dadurch gekennzeichnet, dass** es ein Substrat aus Glas umfasst, auf welches mindestens eine Funktionsschicht auf Basis von die Infrarotstrahlung reflektierendem Silber aufgebracht wird, wobei die Funktionsschicht oder mindestens eine der Funktionsschichten von mindestens einer dielektrischen, transparenten Schicht eingeschlossen ist, und **dadurch, dass** die Funktionsschicht auf ihrer dem Substrat gegenüberliegenden und in direktem Kontakt stehenden Seite von einer ersten Schutzschicht von höchstens 3 nm geometrischer Dicke auf Basis eines aus Zink, Kupfer, Nickel, Chrom, Indium, nichtrostendem Stahl und Legierungen davon in metallischer oder unteroxidierter Form oder einer Legierung auf Basis von Ni, aufgebracht in reinem metallischem Zustand oder in unteroxidiertem oder nitriertem Zustand oder in Form eines Oxidnitrids, aufgebracht wird, gefolgt von einer zweiten Schutzschicht von höchstens 7 nm geometrischer Dicke, welche aus einem Werkstoff ausgewählt aus Titan, Aluminium oder Tantal und deren Legierungen in im Wesentlichen vollständig oxidierter Form zusammengesetzt ist, und die verschieden von dem Werkstoff der an sie direkt angrenzenden, dielektrischen, transparenten Schicht, ist.

12. Glasiertes Teil gemäß Anspruch 11, **dadurch gekennzeichnet, dass** die erste oder die ersten Schutzschichten auf einer Ni- und Cr-Legierung basieren und die zweite oder die zweiten Schutzschichten aus Titanoxid gebildet werden, und **dadurch, dass** mindestens eine der dielektrischen Schichten ein Oxid auf Zinkbasis, vorzugsweise auf Basis einer Zink-Zinn-Legierung umfasst.

13. Glasiertes Teil gemäß einem der Ansprüche 9 bis 10, **dadurch gekennzeichnet, dass** es ein Substrat aus Glas umfasst, auf welchem nacheinander mindestens eine erste dielektrische, transparente Schicht, eine Funktionsschicht auf Silberbasis, eine erste Schutzschicht auf Basis einer Nickellegierung in metallischer, nitrierter, oxidierter oder unteroxidierter Form direkt in Kontakt mit der Funktionsschicht, eine zweite Schutzschicht auf Basis von Titanoxid, welche auf und in Kontakt mit der ersten Schutzschicht aufgebracht ist, und eine zweite dielektrische, transparente Schutzschicht, zusammengesetzt aus einem vom Werkstoff der zweiten, direkt an sie angrenzenden Schutzschicht verschiedenen Werkstoff, aufgebracht sind.

## Claims

1. Process for the production of a glazing unit provided with a multilayer coating deposited on a glass substrate by sputtering at reduced pressure, **characterised in that** at least one first transparent dielectric layer is deposited on the substrate, followed by the deposition of a silver-based functional layer that is reflective to infrared radiation, **in that** a first protective layer with a geometric thickness of at least 3 nm is deposited on the silver-based functional layer in an atmosphere containing 20% oxygen, said protective layer being based on a material chosen from zinc, copper, nickel, chromium, indium, stainless steel and alloys thereof, in the metal or sub-oxidised state, or a Ni-based alloy deposited in the pure metal state or in the sub-oxidised or nitrided state or in the form of an oxynitride, followed by the deposition in an atmosphere containing 50% oxygen at most of a second protective layer with a geometric thickness of 7 nm at most composed of a material chosen from titanium, aluminium or tantalum and alloys thereof, in metal, nitrided, sub-oxidised or oxidised form, and **in that** at least one second transparent dielectric layer is then deposited.

2. Process according to claim 1, **characterised in that** the first protective layer is based on NiCr, preferably based on an NiCr 80/20 alloy.

3. Process according to either one of claims 1 and 2, **characterised in that** the material of the second protective layer is titanium.

4. Process according to any one of claims 1 to 3, **characterised in that** the first protective layer is deposited in a thickness in the range of between 0.5 nm and 2.5 nm, preferably 0.5 nm and 2 nm, and advantageously 0.6 nm and 1.5 nm.

5. Process according to any one of claims 1 to 4, **characterised in that the** second protective layer is deposited in a thickness in the range of between 2 nm and 6 nm.

6. Process according to any one of claims 1 to 5, **characterised in that** at least two silver-based functional layers that reflect infrared radiation are deposited, each being followed by the deposition of first and second protective layers, and **in that** at least one intermediate dielectric layer is deposited between said functional layers.

7. Process according to any one of claims 1 to 6, **characterised in that** a final titanium-based protective layer is deposited to terminate the multilayer coating.

8. Process for the production of a curved or toughened glazing unit provided with a multilayer coating, **characterised in that** a coated substrate obtained by the process according to any one of claims 1 to 7 is then subjected to a bending or toughening operation.

9. Glazing provided with a multilayer coating, **characterised in that** it comprises a glass substrate, on which at least one silver-based functional layer that reflects infrared radiation is deposited, wherein the functional layer or at least one of the functional layers is enclosed by at least one transparent dielectric layer, and **in that** on its face opposite the substrate and directly in contact therewith, said functional layer is superposed by a first protective layer with a geometric thickness of 3 nm at most based on a material chosen from zinc, copper, nickel, chromium, indium, stainless steel and alloys thereof, in the metal or sub-oxidised state, or a Ni-based alloy deposited in the pure metal state or in the sub-oxidised or nitrided state or in the form of an oxynitride, followed by a second protective layer with a geometric thickness of 7 nm at most composed of a material chosen from titanium, aluminium or tantalum and alloys thereof, in a substantially fully oxidised form, and which is different from the material of the transparent dielectric layer directly adjacent thereto.

10. Glazing according to claim 9, **characterised in that** the said first protective layer or layers is/are based on an alloy of Ni and Cr and the said second protective layer or layers is/are formed from titanium oxide.

11. Curved or toughened glazing provided with a multilayer coating, **characterised in that** it comprises a glass substrate, on which at least one silver-based functional layer that reflects infrared radiation is deposited, wherein the functional layer or at least one of the functional layers is enclosed by at least one transparent dielectric layer, and **in that** on its face opposite the substrate and directly in contact therewith, said functional layer is superposed by a first protective layer with a geometric thickness of 3 nm at most based on a material chosen from zinc, copper, nickel, chromium, indium, stainless steel and alloys thereof, in the metal or sub-oxidised state, or a Ni-based alloy deposited in the pure metal state or in the sub-oxidised or nitrided state or in the form of an oxynitride, followed by a second protective layer with a geometric thickness of 7 nm at most composed of a material chosen from titanium, aluminium or tantalum and alloys thereof, in a substantially fully oxidised form and which is different from the material of the transparent dielectric layer directly adjacent thereto.

12. Glazing according to claim 11, **characterised in that** the said first protective layer or layers is/are based on an alloy of Ni and Cr and the said second protective layer or layers is/are formed from titanium oxide, and **in that** at least one of the dielectric layers contains a zinc-based oxide, preferably based on a zinc-tin alloy.

13. Glazing according to either one of claims 9 and 10, **characterised in that** it comprises a glass substrate, on which there are successively deposited at least one first transparent dielectric layer, a silver-based functional layer, a first protective layer based on a nickel alloy in metal, nitrided, oxidised or sub-oxidised form directly in contact with the functional layer, a second protective layer based on titanium oxide deposited onto and in contact with the first protective layer, and a second transparent dielectric layer composed of a material that is different from the material of the second protective layer directly adjacent thereto.
